# EUROPÄISCHE PATENTSCHRIFT

(11) **EP 0 950 838 B1**
(45) Veröffentlichungstag und Bekanntmachung des Hinweises auf die Patenterteilung: **02.07.2003**
(21) Anmeldenummer: 99104066.8
(22) Anmeldetag: 17.03.1999
(51) Int. Cl.: F16H 61/02, F16H 59/02, F16H 63/44

(54) **Vom Fahrer ausgelöstes Schalten einer automatischen Splitschaltung**
Driver initiated shifting for an automatic splitter transmission
Changement de vitesses d'une transmission auxiliaire initié par le conducteur

(30) Priorität: 15.04.1998 DE 19816595
(43) Veröffentlichungstag der Anmeldung: 20.10.1999
(73) Patentinhaber: MAN Nutzfahrzeuge Aktiengesellschaft, 80976 München (DE)
(72) Erfinder: Schaller, Karl-Viktor, Dr.-Ing., 82194 Gröbenzell (DE); Drimml, Peter, Dipl.-Ing.(FH), 85757 Karlsfeld (DE); Maierhofer, Bernd, Dipl.-Ing., 81927 München (DE)

(56) Entgegenhaltungen:
- EP-A- 0 240 901
- EP-A- 0 602 685
- DE-A- 4 006 653
- MARWITZ H ET AL: "ACTROS - DIE NEUE SCHWERE LASTWAGENBAUREIHE VON MERCEDES-BENZ" ATZ AUTOMOBILTECHNISCHE ZEITSCHRIFT,DE,FRANCKH'SCHE VERLAGSHANDLUNG. STUTTGART, Bd. 98, Nr. 9, 1. September 1996 (1996-09-01), Seiten 372-373,376-378, XP000627472 ISSN: 0001-2785

## Beschreibung

Die Erfindung betrifft ein Verfahren nach dem Oberbegriff des Anspruches 1.

Ein Verfahren dieser Art ist aus der EP 0 240 901 B1, die der US-PS 4,722,248 entspricht, bekannt. Dieses Verfahren beschreibt die Bedienung und Arbeitsweise einer halbautomatischen Schalteinrichtung eines Lkw-Getriebes mit Hauptgängen und Splitgängen, wobei die Hauptgänge manuell mit dem Schalthebel zu schalten sind und die Kupplung über das Kupplungspedal zu bedienen ist, während die Splitgänge nach Fahrerwunsch automatisch geschaltet werden. Zum Schalten eines Splitganges muss der Fahrer einen Schalter am Gangschalthebel bedienen, worauf der gewünschte Splitgang ohne weiteres Zutun des Fahrers sofort geschaltet wird.

Aus der Automobiltechnischen Zeitschrift, DE, Francksche Verlagsbuchhandlung, Stuttgart, ATZ, vom September 1996, Seiten 372 bis 378, das ein Testbericht über den Actros ist, wird auch über die EPS = Elektropneumatische Schaltung des Actros berichtet. Eine Recherche hat ergeben, dass ein geplanter Schaltvorgang bei der genannten EPS mittels z. B. des Schalthebels vorwählbar ist, ausgelöst wird der Schaltvorgang aber erst durch das Auskuppeln der Kupplung durch das Betätigen des Kupplungspedals, wobei hier die Schaltung geschaltet wird und durch das Einkuppeln bzw. langsame Loslassen des Kupplungspedals, wobei hier die Schaltung in Wirkung gebracht wird.

Der Erfindung liegt die Aufgabe zugrunde, für ein Schaltgetriebe mit Schaltgestänge und automatisch schaltbaren Splitgängen, ein Verfahren zum Schalten der Splitgänge zu finden, das dem Fahrerwunsch und den Fahrbedingungen optimal gerecht wird.

Die Aufgabe wir erfindungsgemäß durch die Merkmale des Verfahrens nach Anspruch 1 gelöst.

Dadurch, dass der Splitgang mit einem am Handschalthebel angeordneten kleinen Hebel (Vorwählhebel) vorwählbar ist und erst dann geschaltet wird, wenn der, auch im Handschalthebel befindliche Druckknopf oder Sensorknopf vom Fahrer bedient wird, kann der Fahrer den Schalthebel erst dann auslösen, wenn die Fahrsituation dies erfordert. Dadurch kann der Fahrer ungestresst und vorausschauend fahren.

Ungestresst und vorausschauend deshalb, weil er vor einer voraussichtlich kommenden Fahrsituation bereits überlegen kann, ob er den Splitgang braucht oder nicht. Braucht er den Splitgang, kann er bis zum letzten Moment warten und dann den Druck- oder Sensorknopf im Handschalthebel bedienen. Braucht er den Splitgang nicht, so kann er den Vorwählhebel wieder in seine ursprüngliche Position bringen. Die Zeit zum Überlegen kann damit vor die Schaltaktion gelegt werden oder es kann sich ergeben, dass die Schaltaktion nicht erforderlich ist, weil z. B. die Beladung des Fahrzeuges nicht so hoch ist wie angenommen, oder eine zunächst etwas langsamer fahrende Fahrzeugkolonne wieder schneller fährt.

Auch bei Bergabfahrt ist das erfindungsgemäße Verfahren vorteilhaft, weil der Fahrer z. B. alle vorhandenen Dauerbremsen und möglicherweise auch kurzzeitig die Betriebsbremse aktivieren kann, um dann über den Druck- oder Sensorknopf die vorher gewählte Splitgang-Schaltung zu veranlassen oder auch nicht.

Bei Schaltgetrieben, die zwei Splitgänge pro Hauptgang aufweisen, ist in einer hektischen Fahrsituation auch ein Verschalten in den Splitgängen mögich, indem der Fahrer den Splitwählhebel überdrückt und damit einen Splitgang überschaltet. Dies ist mit dem erfindungsgemäßen Verfahren nicht wahrscheinlich.

Bei beiden Getriebeausführungen - ein oder zwei Splitgänge pro Hauptgang - wird der Fahrer auf jeden Fall nicht dazu gezwungen, in dem Moment, in dem er seine besondere Aufmerksamkeit den Fahrereignissen widmet, auch noch zu überlegen, ob und gegebenenfalls welcher Splitgang geschaltet werden muss oder nicht.

Das Zurückschalten wieder in den vorher verlassenen Gang geschieht, in dem der Fahrer den Vorwählhebel für den Splitgang in die ursprüngliche Position bringt und den Druck- oder Sensorknopf erneut bedient.

Wenn der Splitgang nicht geschaltet wurde, genügt das Zurücklegen des Vorwählhebels in die ursprüngliche Position.

## Patentansprüche

1. Verfahren zum Schalten eines Splitganges eines handschaltbaren, mit Schaltgestänge versehenen Wechselgetriebes, mit Gängen und Splitgängen, wobei die Splitgänge automatisch schaltbar sind, mit einem Dieselmotor mit elektronisch geregelter Treibstoffzumessung, mit einem Bordrechner und mit einer automatisch über den Bordrechner steuerbaren Reibungskupplung zwischen Dieselmotor und Wechselgetriebe, mit einem am Handschalthebel befindlichen Schalter zum Vorwählen des Splitganges, **dadurch gekennzeichnet, dass** mit einer ebenfalls am Handschalthebel befindlichen Drucktaste oder einem Sensorknopf der Schaltbefehl für die Schaltung des Splitganges auslösbar ist.

2. Verfahren nach Anspruch 1, **dadurch gekennzeichnet, dass** durch das Bedienen der Drucktaste oder des Sensorknopfes die Momentenanpassung zum automatischen Öffnen der Kupplung, die Drehzahlsteuerung zum gesteuerten Einlegen des Splitganges, das automatische Schließen der Kupplung und die anschließende Momentenanpassung über den Bordrechner, der Signale an die entsprechenden Organe gibt, durchgeführt wird.

## Claims

1. Procedure for shifting a splitter gear of a manual gearbox with shift linkage, gears and splitter gears, which splitter gears can be shifted automatically, with a diesel engine with electronically controlled fuel metering, with an on-board computer and with a friction clutch which is located between the diesel engine and the manual gearbox and can be automatically controlled via the on-board computer, with a switch, provided on the gearshift lever, for preselecting the splitter gear, **characterised in that** the shifting command for shifting the splitter gear can be triggered with a push button, which is also located on the gearshift lever, or with a sensor button.

2. Procedure according to Claim 1, **characterised in that** the actuation of the push button or of the sensor button results in the moment adaptation for automatically opening the clutch, in the speed control action for the controlled engagement of the splitter gear, in the automatic closing of the clutch and in the subsequent moment adaptation via the on-board computer which sends signals to the corresponding organs.

## Revendications

1. Procédé pour enclencher un rapport de splitting d'une boîte de vitesses manuelle dotée d'une timonerie de changement de vitesse, avec rapports simples et rapports de splitting, auquel cas les rapports de splitting peuvent s'engager automatiquement, avec un moteur diesel muni d'un système de dosage du combustible régulé électroniquement, un ordinateur embarqué et un embrayage à friction commandable automatiquement par le biais d'un ordinateur embarqué et placé entre le moteur diesel et la boîte de vitesses manuelle, un contacteur sur le levier de vitesses pour choisir le rapport de splitting, **caractérisée en ce que** la commande de changement de rapport pour le passage du rapport de splitting peut être déclenchée à l'aide d'un bouton poussoir ou d'un bouton à capteur se trouvant également sur le levier de vitesses.

2. Procédé selon la revendication 1, **caractérisée en ce que** l'adaptation du couple permettant l'ouverture automatique de l'embrayage, la commande de régime pour l'enclenchement commandé du rapport de splitting, la fermeture automatique de l'embrayage et l'adaptation suivante du couple par le biais de l'ordinateur embarqué, qui envoie les signaux aux organes concernés, sont réalisées par l'activation du bouton poussoir ou du bouton à capteur.
